(19) Europäisches Patentamt
European Patent Office
Office européen des brevets

(11) **EP 2 460 233 B1**

(12) **FASCICULE DE BREVET EUROPEEN**

(45) Date de publication et mention
de la délivrance du brevet:
**27.03.2019 Bulletin 2019/13**

(51) Int Cl.:
***H01R 4/64*** *(2006.01)* ***B64D 45/00*** *(2006.01)*
*H02G 3/02* *(2006.01)*

(21) Numéro de dépôt: **10752054.6**

(22) Date de dépôt: **20.07.2010**

(86) Numéro de dépôt international:
**PCT/FR2010/051527**

(87) Numéro de publication internationale:
**WO 2011/012795 (03.02.2011 Gazette 2011/05)**

(54) **AERONEF COMPRENANT DES EQUIPEMENTS ELECTRIQUES ET DES PIECES EN MATERIAU COMPOSITE**

LUFTFAHRZEUG MIT ELEKTRISCHEN APPARATUREN UND TEILEN AUS VERBUNDSTOFF

AIRCRAFT WITH ELECTRICAL DEVICES AND PARTS MADE OF COMPOSITE MATERIAL

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **31.07.2009 FR 0955432**

(43) Date de publication de la demande:
**06.06.2012 Bulletin 2012/23**

(73) Titulaire: **Airbus Operations**
**31000 Toulouse (FR)**

(72) Inventeurs:
• **PONS, François**
**F-31840 Aussonne (FR)**
• **LARROSE, Nicolas**
**F-31140 Launaguet (FR)**

(74) Mandataire: **Potdevin, Emmanuel Eric**
**LLR**
**11 boulevard de Sébastopol**
**75001 Paris (FR)**

(56) Documents cités:
EP-A1- 1 569 303    WO-A1-2006/069997
WO-A2-2010/099052    US-A- 4 671 583
US-A- 4 920 449    US-A1- 2005 083 617

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne les équipements électriques situés à bord des aéronefs.

Un avion comprend de très nombreux équipements ou appareils électriques de différentes natures. Il peut s'agir de moteurs ou encore de dispositifs électroniques tels que des ordinateurs.

Parmi ces équipements, de nombreux sont alimentés en courant électrique monophasé. A cette fin, l'équipement est connecté au pôle positif du générateur au moyen d'un câble. Quant à la connexion au pôle négatif du générateur, elle se fait en connectant l'autre pôle de l'équipement à la masse métallique de l'avion à laquelle le pôle négatif du générateur est lui aussi relié. Il s'agit là du circuit des courants dits fonctionnels.

Il est nécessaire de prévoir aussi l'évacuation d'éventuels courants de défaut relatifs aux équipements. Ce type de courant est par exemple un courant de fuite ou un courant de court-circuit et peut apparaître en cas d'anomalie. Lorsque la majeure partie de l'avion est réalisée en métal, les courants de défaut peuvent être évacués de la même façon que les courants fonctionnels, l'équipement étant relié à des pièces métalliques de l'avion.

Mais il en va différemment lorsqu'on souhaite réaliser une partie de l'avion en matériau composite qui comprend une matrice en matière plastique renforcée par des fibres non métalliques. Un tel matériau est en effet moins bon conducteur du courant électrique que le métal.

Pour connecter à la masse métallique de l'appareil les équipements présents sur ce type d'avion et ainsi évacuer les courants fonctionnels, chaque équipement est relié à cette masse au moyen d'un câble spécifique. Ainsi, il est connu d'envisager un réseau métallique spécifique, parfois désigné, au niveau du fuselage, par le terme réseau électrique de structure ou en anglais *electrical structure network* ou ESN.

Par ailleurs, il faut prévoir qu'un éventuel courant de défaut de l'équipement puisse rejoindre la masse métallique. A cette fin, on utilise un réseau spécifique appelé réseau métallique de défaut, en anglais *metallic bonding network* ou MBN. Ce réseau se confond en partie avec des pièces métalliques structurales de l'avion telles que des rails de sièges pour réaliser un maillage de l'avion permettant d'évacuer les courants de défaut des équipements. Dans ce contexte, il est connu de prévoir des composants spécifiques tels que des rubans métalliques sur chaque cadre et chaque poutre transverse de l'avion afin d'assurer, malgré la présence du matériau composte, une continuité électrique entre les pièces métalliques qui permette l'évacuation des courants de défaut par la masse de l'avion.

Mais la somme de ces éléments métalliques forme toutefois un maillage complexe et pose de nombreux problèmes. Ainsi, l'ajout des composants spécifiques engendre une augmentation du poids de l'avion. Il augmente la durée de l'ensemble des opérations de montage. Le coût associé est non négligeable. Ces éléments rendent aussi plus complexe le réseau de retour de courant. Enfin, ces éléments nécessitent des études spécifiques relatives au dimensionnement, à la maintenance, à la corrosion et au raccordement des parties de l'ESN entre elles.

Les documents US-4 920 449, WO-2006/069997 et US-4 671 583 divulguent des aéronefs dont des pièces en matériau composite sont parcourues par des courants de défaut.

Un but de l'invention est de prévoir une solution plus simple pour l'évacuation des courants de défaut à bord d'un aéronef comprenant des pièces en matériau composite.

A cet effet, on prévoit selon l'invention un aéronef selon la revendication 1.

Ainsi, l'évacuation des éventuels courants de défaut de l'équipement se fait au moyen d'un réseau mixte formé en matériau composite et en métal. La partie métallique du réseau correspond à la masse métallique de l'aéronef. Il s'agit du réseau principal. La ou les pièces en matériau composite forment un réseau d'acheminement permettant de diriger le courant de défaut vers ce réseau principal. Ce sont donc les pièces en matériau composite elles-mêmes qui servent pour l'évacuation des courants de défaut des équipements. L'invention tire parti du fait que les propriétés électriques des matériaux composites à bord des aéronefs ne leur permettent pas d'évacuer vers la masse de l'aéronef les courants fonctionnels, mais leur permettent en revanche d'évacuer des courants de défaut. La mise en oeuvre de l'invention ne nécessite pas l'ajout d'un grand nombre de composants spécifiques. Elle n'engendre pas un surpoids ni ne nécessite d'augmenter de façon substantielle la durée des opérations de montage. Il n'y a pas de surcoût substantiel et le réseau de retour de courant ne se trouve pas compliqué. Enfin, il n'est pas nécessaire de prévoir les études précitées pour le raccordement des parties de l'ESN entre elles. De plus, le réseau est composé en majeure partie d'éléments métalliques, notamment structurels, de l'aéronef, ce qui lui procure une résistance électrique de maille la plus faible possible.

En outre, on assure une bonne connexion électrique de l'équipement à la pièce en matériau composite en vue de permettre une évacuation convenable des courants de défaut. Plus précisément, l'ajustement permet de rendre minime, voire négligeable, la résistance de contact entre l'organe et la pièce, ce qui facilite l'évacuation des courants de défaut par la pièce en matériau composite.

Enfin, la relation entre les diamètres assure que la résistance de contact est négligeable.

Avantageusement, le matériau composite comprend une matière plastique renforcée par des fibres de carbone.

De préférence, l'aéronef comprend un dispositif de surveillance apte à détecter un courant de défaut relatif à l'équipement.

Ce dispositif permet de protéger l'équipement à l'égard des conséquences possibles de l'apparition d'un courant de défaut.

De préférence, le dispositif est apte à interrompre une alimentation en courant de l'équipement lorsqu'il détecte un courant de défaut relatif à l'équipement.

Avantageusement, le dispositif de surveillance fait partie de l'équipement.

Le dispositif est ainsi dédié à l'équipement. En cas de courant de défaut, il est en mesure d'isoler l'équipement sans interrompre le fonctionnement des autres équipements. Et il ne nécessite pas d'opération de montage spécifique sur chaîne.

D'autres caractéristiques et avantages de l'invention apparaîtront encore dans la description suivante d'un mode de réalisation et d'une variante donnés à titre d'exemples non limitatifs en référence aux dessins annexés sur lesquels :

- la figure 1 est une vue en perspective d'un avion selon l'invention ;
- la figure 2 est un schéma électrique illustrant la connexion d'un équipement à bord de l'avion de la figure 1 ;
- la figure 3 est une vue de l'équipement et de sa connexion à une partie de la structure de l'avion de la figure 1 ;
- la figure 4 est une vue en coupe de la connexion suivant le plan IV-IV de la figure 3;
- la figure 5 présente des courbes illustrant l'évolution de la résistance de couplage en fonction de l'interférence pour deux matériaux.
- la figure 6 est un schéma électrique illustrant dans une variante le principe d'un dispositif de surveillance ; et
- la figure 7 est un schéma électrique de la connexion de l'équipement intégrant ce dispositif de surveillance.

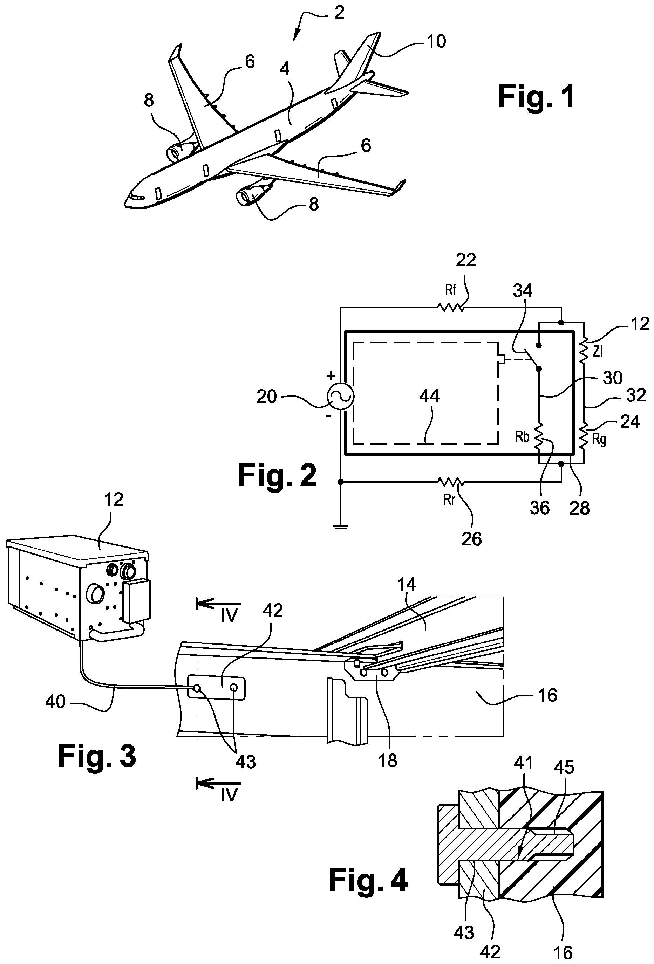

On a illustré à la figure 1 un aéronef selon l'invention. Il s'agit ici d'un aérodyne et plus précisément d'un avion. L'avion 2 comprend un fuselage 4, deux ailes 6 portant des moteurs respectifs 8, ainsi qu'un empennage 10.

L'avion 2 comprend à bord de nombreux équipements électriques constitués par divers dispositifs et appareils. Il s'agit par exemple de moteurs ou de dispositifs électroniques tels que des ordinateurs. L'un de ces équipements 12 a été illustré à la figure 3.

La structure de l'avion comprend des pièces de structure en métal telles que le rail de sièges 14 illustré à la figure 3. L'avion comprend également des pièces de structure en matériau composite telles que la traverse 16 illustrée à la même figure.

On entend ici par matériau composite un assemblage d'au moins deux matériaux non miscibles mais ayant une forte capacité d'adhésion. Le matériau composite comprend une ossature ou renfort qui assure sa tenue mécanique et une matrice de protection. La matrice est en l'espèce une matière plastique et le renfort est formé par des fibres de carbone. Le matériau est donc ici une matière plastique renforcée par des fibres de carbone. Le rail 14 repose sur la traverse 16 en étant perpendiculaire à elle et est fixé à cette dernière au moyen d'un élément de jonction structural 18.

On a illustré à la figure 2 le schéma électrique de connexion de l'équipement 12 à un générateur de courant 20 à bord de l'avion 2. Ce générateur est ici de type monophasé. L'équipement 12, symbolisé sur le schéma par son impédance ZI, est connecté au pôle positif du générateur au moyen d'un conducteur tel qu'un câble 22 présentant une résistance Rf. Il est par ailleurs relié en direction du pôle négatif du générateur par un conducteur de mise à la masse tel qu'un câble 24 présentant une résistance Rg. Ce câble est lui-même connecté à l'ESN 26 de l'avion 2 qui présente, dans le trajet de retour du courant fonctionnel de l'équipement 12, une résistance Rr. Ces éléments forment le circuit de mise à la masse de l'équipement 12 pour le retour des courants fonctionnels, circuit illustré en traits pleins et référencé 28 sur la figure 2. Il s'agit du trajet normal suivi par le courant électrique fourni par le générateur 20 et alimentant l'équipement 12 lors du fonctionnement normal de ce dernier.

On a illustré sur la figure 2 une branche 30 s'étendant en parallèle à la branche 32 qui porte en série l'équipement 12 et le câble 24. La branche 30 illustre la possibilité d'un court-circuit symbolisé par l'interrupteur 34 qu'elle porte. Lors d'un tel court-circuit, le courant provenant du pôle positif du générateur 20 passe au moins en partie par la branche 30, traverse cet interrupteur en position fermée et suit un circuit de courant de défaut passant par un ensemble 36 symbolisé par la résistance Rb, puis par l'ESN 26.

L'élément 36 est constitué en l'espèce, comme illustré à la figure 3, en connectant l'équipement 12 à la pièce 16 en matériau composite au moyen d'un câble 40 connecté lui-même à un élément métallique 42 telle qu'une platine, fixé à la pièce 16. Cette fixation est effectuée au moyen de plusieurs organes métalliques tels que des vis 43 qui traversent chacune la platine 42 et pénètrent dans la pièce 16.

Comme illustré à la figure 4, on réalise un ajustement serré de chaque vis 43 avec la pièce 16. Pour cela, la vis 43 présente en l'espèce sur sa tige un tronçon cylindrique lisse en contact avec la pièce 16. Ici le filet 45 ne s'étend donc que sur une portion de la tige de la vis, sur son tronçon d'extrémité distale. La vis est reçue dans un alésage calibré 41 de la pièce 16 réalisé avant l'introduction de la vis. Le diamètre $v$ de la vis 43 et le diamètre $e$ de l'alésage vérifient en l'espèce:

$$(v - e)/v \geq 0,0025$$

Un tel ajustement serré permet une mise en pression de la face de la tige de la vis contre la face de l'alésage en composite. On met donc en place une pression radiale entre la vis et la pièce de façon à avoir une pression de contact entre la vis et l'alésage qui dépasse 100 MPa. Ce seuil permet de rendre la résistance électrique de contact entre la vis et la pièce sensiblement constante et minimale.

La valeur de 0,0025 permet de rendre négligeable la résistance de contact. On obtiendra des résultats encore meilleurs si l'on réduit encore la résistance de contact en prenant une valeur minimale égale à 0,0030 ou même à 0,0035. Naturellement, il est préférable en revanche de limiter le rapport (v-e)/v pour qu'il n'excède pas 0,0083 par exemple, afin de ne pas dépasser les possibilité mécaniques de la matière plastique.

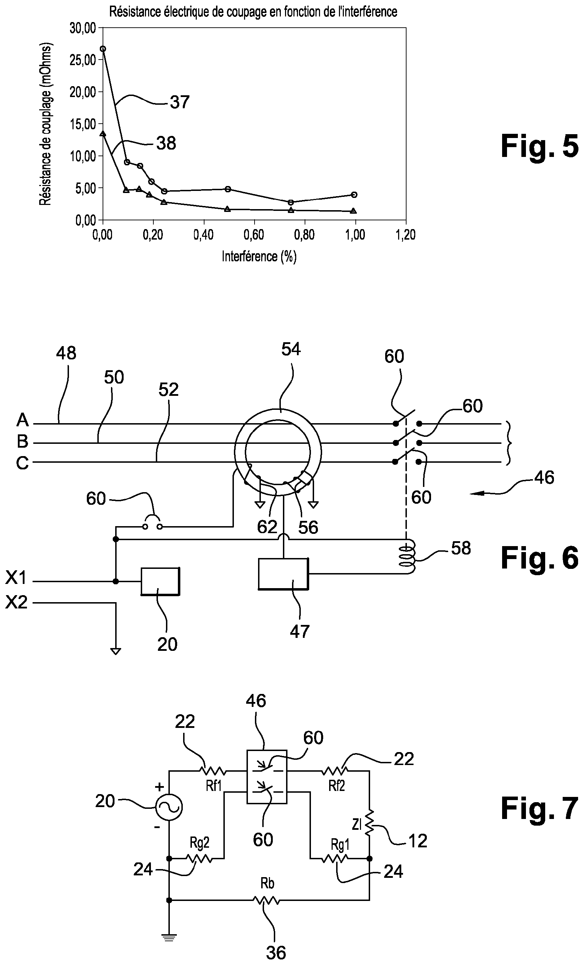

On a illustré à la figure 5 deux courbes expérimentales montrant l'évolution de la résistance de couplage, ou résistance de contact, en ordonnée, en fonction du serrage de l'assemblage entre la vis et l'alésage qui le reçoit. C'est la grandeur (v-e)/v, désignée par le terme « interférence », mesurée en pourcentage, qui figure en abscisse. La courbe supérieure 37 illustre des résultats d'essais sur un matériau thermoplastique tandis que la courbe inférieure 38 concerne un matériau thermoplastique. On observe que, à partir d'une valeur d'interférence de 0,25%, la résistance de couplage demeure inférieure à 5 mOhms pour les deux matériaux.

L'équipement 12 se trouve ainsi électriquement connecté à la pièce 16, laquelle est reliée via le rail 14 à l'ESN 26 de l'avion. L'élément 36 illustré sur le circuit de la figure 2 est donc formé ici par le câble 40, la platine 42, les vis 43 et la portion de la pièce 16 traversée par le courant de défaut le cas échéant.

Ainsi, en présence d'un court-circuit symbolisé par la fermeture de l'interrupteur 34, le courant suit non plus la branche 32 mais la branche 30. Le courant de défaut se trouve donc évacué par un circuit passant notamment par la pièce 16 en matériau composite. Ce circuit 44 de courant de défaut a été illustré en traits pointillés sur la figure 2.

Dans une variante illustrée aux figures 6 et 7, on peut envisager de protéger l'équipement 12 à l'égard des courants de défaut au moyen d'un dispositif de surveillance 46. La constitution et le fonctionnement d'un tel dispositif ont été illustrés à la figure 6 dans l'hypothèse d'une alimentation en courant de type triphasé. Le principe demeure toutefois similaire en présence d'un courant monophasé. On a ainsi désigné par des branches 48, 50 et 52 les trois brins A, B et C d'une alimentation de bord en courant triphasé. Le dispositif 46 comprend un tore 54 traversé par ces trois branches. Une alimentation en courant monophasé 20 a été illustrée avec son pôle positif désigné par la branche x1 tandis que la masse est illustrée avec la branche x2. Le dispositif 46 comprend un module central de commande 47, un enroulement 56 autour du tore 54 connecté au module 47 et à la masse et une bobine 58 connectée à l'alimentation 20 et au module 47. Cette bobine, lorsqu'elle est alimentée en courant, actionne des interrupteurs 60 disposés sur chacune des branches A, B et C et permettant l'interruption du courant dans chacune d'elles.

En régime de fonctionnement normal, à savoir ici en mode triphasé équilibré, la somme des courants circulant dans les phases A, B et C est nulle. Par conséquent, aucun flux magnétique ne circule dans le tore 54. Les interrupteurs 60 restent donc fermés.

En cas de défaillance, par exemple lorsqu'apparaît un court-circuit au niveau de la charge alimentée par ce courant triphasé, la somme des courants dans les phases A, B et C n'est plus nulle de sorte qu'un flux magnétique prend naissance dans le tore 54. Ce flux génère un courant dans l'enroulement 56, courant qui est transmis au module 47. Ce dernier commande alors l'alimentation en courant du bobinage 58 pour l'ouverture des interrupteurs 60, ce qui interrompt la circulation du courant dans les branches A, B et C.

Le dispositif 46 comprend une branche de test s'étendant en parallèle à la branche alimentant le bobinage 58. La branche de test est reliée à la branche x1 de l'alimentation 20 et comprend un bouton 61 et un enroulement 62 autour du tore 54. Cet enroulement est aussi relié à la masse. Lorsqu'on appuie sur le bouton 61, l'enroulement 62 se trouve alimenté en courant à partir du générateur 20, ce qui provoque l'apparition d'un flux magnétique dans le tore 54 et l'apparition d'un courant dans l'enroulement 56. Comme précédemment, le courant dans chacune des branches A, B et C se trouve interrompu.

On a illustré à la figure 7 ce principe pour la connexion de l'équipement 12. On retrouve ainsi ce dernier alimenté en courant par le pôle positif du générateur 20 au moyen d'un câble 22 ayant des résistances Rf1 et Rf2.

En mode de fonctionnement normal, le courant est évacué vers la masse de l'avion à travers un câble 24 de résistances Rg1 et Rg2. Le dispositif de surveillance 46 est monté sur chacun de ces câbles 22 et 24. En présence d'un courant de défaut, le courant passe non plus par le câble 22 mais par le circuit de défaut comprenant l'élément 36 de résistance Rb.

Le dispositif de surveillance 46 comprend un interrupteur 60 pour chacun des câbles 22 et 24. En mode de fonctionnement normal, ces deux interrupteurs sont fermés de sorte que les câbles 22 et 24 sont passants. En cas de défaut, du courant passe par le circuit de défaut du câble 36, ce qui engendre un déséquilibre dans les courants traversant les câbles 22 et 24. En conséquence, le dispositif de surveillance 46 provoque l'ouverture des deux interrupteurs 60, interrompant ainsi toute connexion de l'équipement 12 avec le générateur. L'équipement 12 se trouve ainsi protégé.

Le principe illustré à la figure 6 est applicable quel que soit le mode d'alimentation en courant, à savoir courant alternatif ou courant continu.

Le calcul du dimensionnement des différents éléments, notamment le calibre des interrupteurs 60, sera fonction de l'impédance Rb qui est elle-même liée à la qualité de la résistance de contact entre les vis 43 et la pièce 16 et à la résistance de cette dernière, grandeur également importante pour l'injection du courant dans le matériau composite.

De même, l'agencement devra permettre de manière permanente la circulation d'un courant relativement élevé.

On pourra par exemple positionner le dispositif 46 au niveau des contacteurs des routes d'alimentation des équipements dont fait partie l'équipement 12. Mais ce mode de réalisation a pour inconvénient d'entraîner la coupure de l'alimentation électrique de tous les équipements reliés au même contacteur lorsqu'un seul des équipements présente un courant de défaut.

Il est donc préférable de développer la fonctionnalité du dispositif 46 au niveau de chaque équipement en lui-même. On peut dès lors prévoir un dispositif de surveillance dédié à chaque équipement pour le protéger des surintensités. Ce dispositif de surveillance peut par exemple prendre la forme d'un contacteur de puissance à état solide ou *solid state power contact.*

On comprend que chacun des équipements de l'avion est connecté à une pièce 16 distincte de celle à laquelle est connecté au moins un autre équipement de l'avion, voire dédiée à ce seul équipement, ces équipements utilisant par ailleurs le même ESN.

On voit que l'invention évite de devoir compliquer et alourdir le réseau de retour des courant de défaut.

Bien entendu, on pourra apporter à l'invention de nombreuses modifications sans sortir du cadre de celle-ci.

Les organes de fixation 43 pourraient être autres que des vis: il pourrait s'agit de boulons, de goujons, de rivets, etc.. De même, on peut prévoir que l'ajustement serré est réalisé directement entre les pièces 42 et 16.

**Revendications**

1. Aéronef qui comprend au moins deux équipements électriques (12) et, pour chaque équipement électrique (12), un circuit (44) de courant de défaut dudit équipement électrique (12) passant par un réseau de retour de courant (26) dudit aéronef,
ledit réseau (26) de retour de courant étant formé de pièces métalliques de l'aéronef, chaque circuit (44) de courant de défaut comprenant au moins une pièce (16) en matériau composite formant connexion électrique entre ledit équipement électrique (12) et ledit réseau de retour de courant (26),
l'aéronef étant **caractérisé en ce que**

chaque circuit (44) de courant de défaut comprend au moins un organe métallique de contact (43) connecté électriquement à un des équipements électriques (12) et assemblé à ladite au moins une pièce (16) en matériau composite au moyen d'un ajustement serré de l'organe avec ladite pièce (16) en matériau composite, l'organe de contact (43) s'étendant dans un orifice (41) de la pièce (16) en matériau composite, un diamètre *v* de l'organe et un diamètre *e* de l'orifice vérifiant : $(v - e) / v \geq 0{,}0025$,
l'aéronef comprend une structure métallique connectée aux pièces (16) en matériau composite de sorte que le circuit de courant de défaut (44) de chaque équipement électrique (12) passe par la pièce (16) en matériau composite associée à cet équipement électrique et la structure métallique sans passer par la pièce (16) en matériau composite associée à chaque autre équipement électrique (12), et
chaque circuit (44) de courant de défaut comprend majoritairement, par référence à une longueur dudit circuit (44) de courant de défaut, des pièces métalliques de l'aéronef.

2. Aéronef selon la revendication précédente dans lequel le matériau composite comprend une matière plastique renforcée par des fibres de carbone.

3. Aéronef selon l'une quelconque des revendications précédentes qui comprend un dispositif de surveillance (46) apte à détecter au moins un courant de défaut relatif à au moins un des équipements électriques (12).

4. Aéronef selon la revendication précédente dans lequel le dispositif (46) est apte à interrompre une alimentation en courant d'au moins un des équipements en ouvrant un interrupteur (60) lorsqu'il détecte au moins un des courants de défaut relatif à au moins un des équipements électriques (12).

5. Aéronef selon l'une quelconque des revendications 3 ou 4 dans lequel le dispositif de surveillance (46) fait partie de l'équipement électrique (12) ou de chaque équipement électrique (12).

**Patentansprüche**

1. Flugzeug, das mindestens zwei elektrische Ausrüstungen (12) und für jede elektrische Ausrüstung (12) einen Standardstromkreis (44) der elektrischen Ausrüstung (12) umfasst, der durch ein Stromrückführungsnetz (26) des Flugzeugs verläuft, wobei das Stromrückführungsnetz (26) aus Metallteilen des Flugzeugs gebildet ist, wobei jeder Standardstromkreis (44) mindestens ein Teil (16) aus Verbundmaterial umfasst, das eine elektrische Verbindung zwischen der elektrischen Ausrüstung (12) und dem Stromrückführungsnetz (26) bildet, wobei das Flugzeug **dadurch gekennzeichnet ist, dass** jeder Standardstromkreis (44) mindestens ein metallisches Kontaktorgan (43) umfasst, das mit einer der elektrischen Ausrüstungen (12) elektrisch verbunden ist und an das mindestens eine Teil (16) aus Verbundmaterial mittels einer Pressanpassung des Organs mit dem Teil (16) aus Verbundmaterial angeschlossen ist, wobei sich das Kontaktorgan (43) in eine Öffnung (41) des Teils (16) aus Verbundmaterial erstreckt,

wobei ein Durchmesser $v$ des Organs und ein Durchmesser $e$ der Öffnung $(v - e)/v \geq 0{,}0025$ entspricht, wobei das Flugzeug eine Metallstruktur umfasst, die mit den Teilen (16) aus Verbundmaterial derart verbunden ist, dass der Standardstromkreis (44) jeder elektrischen Ausrüstung durch das Teil (16) aus Verbundmaterial, das dieser elektrischen Ausrüstung (12) zugeordnet ist, und die Metallstruktur verläuft, ohne durch das Teil (16) aus Verbundmaterial zu verlaufen, das jeder anderen elektrischen Ausrüstung (12) zugeordnet ist, und

jeder Standardstromkreis (44) mehrheitlich, unter Bezugnahme auf eine Länge des Standardstromkreises (44), Metallteile des Flugzeugs umfasst.

2. Flugzeug nach einem vorhergehenden Anspruch, wobei das Verbundmaterial einen durch Karbonfasern verstärkten Kunststoff umfasst.

3. Flugzeug nach einem der vorangehenden Ansprüche, das eine Überwachungsvorrichtung (46) umfasst, die imstande ist, mindestens einen Standardstrom in Bezug auf mindestens eine der elektrischen Ausrüstungen (12) zu ermitteln.

4. Flugzeug nach einem vorangehenden Anspruch, wobei die Vorrichtung (46) imstande ist, eine Stromversorgung mindestens einer der elektrischen Ausrüstungen (12) durch Öffnen eines Schalters (60) zu unterbrechen, wenn sie mindestens einen der Standardströme in Bezug auf mindestens eine der elektrischen Ausrüstungen (12) ermittelt.

5. Flugzeug nach einem der Ansprüche 3 oder 4, wobei die Überwachungsvorrichtung (46) Teil der elektrischen Ausrüstung (12) oder jeder elektrischen Ausrüstung (12) ist.

**Claims**

1. Aircraft which comprises at least two electrical devices (12) and for each electrical device (12) a fault current circuit (44) for said electrical device (12) passing by a current return network (26) of said aircraft, said current return network (26) consisting of metallic parts of the aircraft, each fault current circuit (44) comprising at least one part (16) made of composite material forming an electrical connection between said electrical device (12) and said current return network (26), the aircraft being **characterised in that** each fault current circuit (44) comprises at least one contact metallic member (43) connected electrically to one of the electrical devices (12) and assembled to said at least one part (16) made of composite material by tight adjustment of the member with said part (16) made of composite material, the contact member (43) extending in a hole (41) of the part (16) made of composite material, a diameter $v$ of the member and a diameter $e$ of the hole satisfying: $(v - e)/v \geq 0.0025$, the aircraft comprises a metallic structure connected to the parts (16) made of composite material such that the fault current circuit (44) of each electrical device (12) passes by the part (16) made of composite material associated with this electrical device (12) and the metallic structure without passing by the part (16) made of composite material associated with each other electrical device (12), and each fault current circuit (44) mostly comprises, with reference to a length of said fault current circuit (44), metallic parts of the aircraft.

2. Aircraft according to the preceding claim, wherein the composite material comprises a plastic material reinforced by carbon fibres.

3. Aircraft according to any one of the preceding claims which comprises a monitoring device (46) adapted to detect at least one fault current concerning at least one of the electrical devices (12).

4. Aircraft according to the preceding claim, wherein the device (46) is adapted to interrupt a current supply of at least one of the electrical devices (12), by opening a switch (60) when it detects at least one of the fault currents concerning at least one of the electrical devices (12).

5. Aircraft according to claim 3 or 4, wherein the monitoring device (46) is part of the electrical device (12) or of each electrical device (12).

**Fig. 1**

**Fig. 2**

**Fig. 3**

**Fig. 4**

Résistance électrique de coupage en fonction de l'interférence

**Fig. 5**

**Fig. 6**

**Fig. 7**

**EP 2 460 233 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 4920449 A
- WO 2006069997 A
- US 4671583 A